# EUROPEAN PATENT SPECIFICATION

(11) **EP 2 347 950 B1**
(45) Date of publication and mention of the grant of the patent: **12.03.2014**
(21) Application number: 10818851.7
(22) Date of filing: 24.09.2010
(51) Int. Cl.: B62K 11/10

(54) **Motorcycle vehicle body frame**
Motorradrahmen
Cadre d'une motocyclette

(30) Priority: 25.09.2009 JP 2009220840
(43) Date of publication of application: 27.07.2011
(73) Proprietor: Yamaha Hatsudoki Kabushiki Kaisha, Iwata-shi, Shizuoka 438-8501 (JP)
(72) Inventor: NOMURA, Yasushi, Iwata-shi Shizuoka 438-8501 (JP)
(74) Representative: Grünecker, Kinkeldey, Stockmair & Schwanhäusser
(86) International application number: PCT/JP2010/066533
(87) International publication number: WO 2011/037179

(56) References cited:
- JP-A- 2 204 188
- JP-A- 2 204 188
- JP-A- 59 109 480
- JP-A- 62 178 485
- JP-A- 2002 046 683
- TW-B- I 306 439
- US-A- 2 551 982

## Description

The present invention relates to a motorcycle and a motorcycle vehicle body frame.

Recently, there have been increasing needs for motorcycles, such as scooters, provided with a foot rest disposed forwards of a seat. Such motorcycles are required to have a wide foot rest. In response, Patent Literature 1 to be described and the like have proposed a variety of motorcycles provided with a wide foot rest. Especially, Patent Literature 1 proposes a high stiffness scooter provided with a wide foot rest.

In addition, a motorcycle vehicle body frame according to the preamble of claim is known from JP-A-1990-204188, as well as from TW I 306439 B.

FIG. 20 is a left side view of a motorcycle described in Patent Literature 1. FIG. 21 is a front view of a vehicle body frame of the motorcycle described in Patent Literature 1. As illustrated in FIG. 20, a motorcycle 100 is a scooter including a floor (foot rest) 101 of a low floor type.

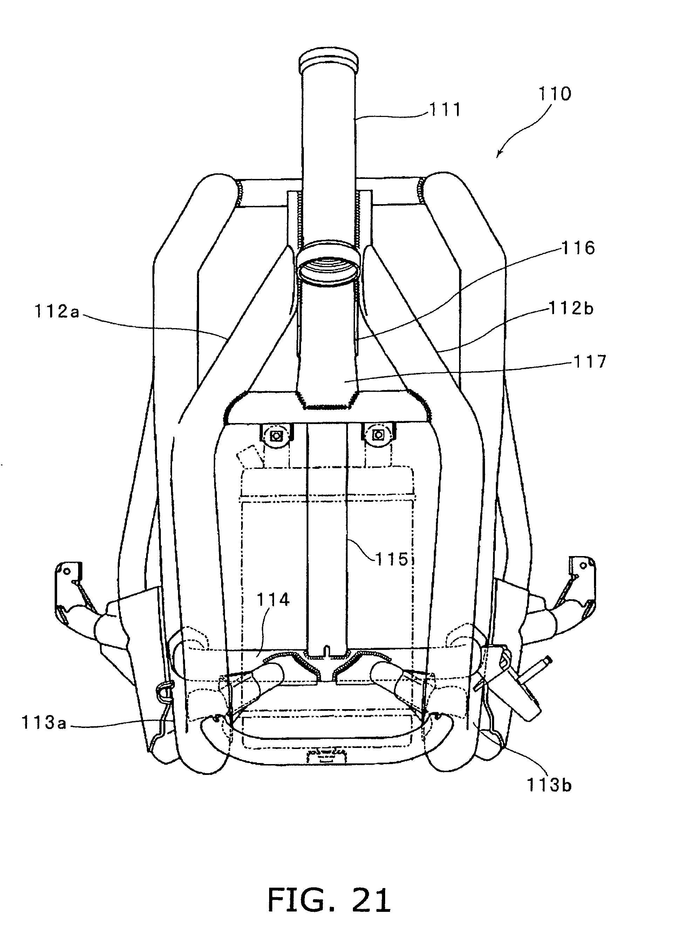

The motorcycle 100 includes a vehicle body frame 110. As illustrated in FIG. 21, the vehicle body frame 110 includes a head pipe 111. A right down frame portion 112a and a left down frame portion 112b are connected to the head pipe 111. The right and left down frame portions 112a and 112b are respectively extended downwards from the head pipe 111. A right bottom frame portion 113a is connected to the bottom end portion of the right down frame portion 112a, whereas a left bottom frame portion 113b is connected to the bottom end portion of the left down frame portion 112b. The right and left bottom frame portions 113a and 113b are respectively extended rearwards from the right and left down frame portions 112a and 112b. A cross frame portion 114 is connected to the right and left bottom frame portions 113a and 113b. The cross frame portion 114 is positioned under the floor 101. Further, a center frame portion 115 is disposed between the head pipe 111 and the cross frame portion 114 while being extended rearwards and obliquely downwards. The center frame portion 115 is connected to the head pipe 111 through a main pipe 117. The center frame portion 115 is connected to the cross frame portion 114 at a position rearward of the bottom ends of the down frame portions 112a and 112b in a longitudinal (back and forth) direction.

Thus, the motorcycle 100 is provided with the center frame portion 115 and the cross frame portion 114 as essential components. The components enhance stiffness of the vehicle body frame 110.

Further, a gusset 116 is disposed between the head pipe 111 and the main pipe 117. The right and left down frame portions 112a and 112b are respectively connected to the gusset 116. Thus, the motorcycle 100 is provided with the gusset 116 for enhancing stiffness in the connections between the head pipe 111 and the down frame portions 112a and 112b. Therefore, the connection between the head pipe 111 and the right down frame portion 112a and the connection between the head pipe 111 and the left down frame portion 112b are prevented from being easily deformed and damaged/broken even when external force is applied to the vehicle body frame 110.

PTL 1: Japan Laid-open Patent Application Publication No. JP-A-2006-298356.

However, it is essential for the motorcycle 100 to include the center frame portion 115 extended rearwards and obliquely downwards from the head pipe 111 for enhancing stiffness of the vehicle body frame 110. This makes it difficult to sufficiently extend the longitudinal length of the floor 101.

The present invention is produced in view of the above. It is an object of the present invention to provide a high stiffness motorcycle vehicle body frame which would allow a motorcycle to have a foot rest with a large longitudinal size. Such an object is achieved by a motorcycle vehicle body frame in accordance with claim 1.

A motorcycle vehicle body frame according to the present invention includes a head pipe portion, a down frame portion, a bottom frame portion and a rear frame portion. The head pipe portion is positioned in a transverse center of the motorcycle vehicle body frame. The down frame portion is connected to the head pipe portion. The down frame portion is extended downwards from the head pipe portion. The bottom frame portion is extended rearwards from a bottom end portion of the down frame portion. The rear frame portion is extended upwards from a rear end portion of the bottom frame portion. The down frame portion includes a right down frame portion and a left down frame portion. The motorcycle vehicle body frame further includes a first cross frame portion. The first cross frame portion connects the right and left down frame portions while passing through a rear of the head pipe portion in a view of an extending direction of a center longitudinal axis of the head pipe portion. The first cross frame portion is connected to the head pipe portion. A connection between the head pipe portion and the right down frame portion and a connection between the head pipe portion and the left down frame portion are positioned higher than a connection between the head pipe portion and the first cross frame portion. The motorcycle vehicle body frame further includes a second cross frame portion connected to the head pipe portion, the second cross frame portion connecting the right down frame portion and the left down frame portion, the second cross frame portion passing through the front of the head pipe portion in the view of the extending direction of the center longitudinal axis of the head pipe portion, wherein the connections between the head pipe portion and the down frame portions are positioned higher than a connection between the head pipe portion and the second cross frame portion.

According to the present invention, it is possible to provide a high stiffness motorcycle vehicle body frame which would allow a motorcycle to have a foot rest with a large longitudinal size.
FIG. 1 is a schematic right side view of a motorcycle.
FIG. 2 is a schematic right side view of the motorcycle for explaining a vehicle body frame.
FIG. 3 is a schematic perspective view of the vehicle body frame.
FIG. 4 is a schematic plan view of the vehicle body frame.
FIG. 5 is a schematic left side view of the vehicle body frame.
FIG. 6 is a schematic front view of the vehicle body frame.
FIG. 7 is a schematic plan view of the front portion of the vehicle body frame seen in an extending direction of the center axis of a head pipe portion.
FIG. 8 is a schematic perspective view of the vehicle body frame and a front wheel seen from an obliquely left rear side.
FIG. 9 is a schematic perspective view of the vehicle body frame and the front wheel seen from an obliquely left front side.
FIG. 10 is a schematic outline view for explaining behavior of the vehicle body frame when external force is applied to the front wheel in a rearward direction.
FIG. 11 is a schematic perspective view of the front portion of a vehicle body frame according to a first example not forming part of the invention but useful for its understanding.
FIG. 12 is a schematic perspective view of the front portion of a vehicle body frame according to a second example not forming part of the invention but useful for its understanding.
FIG. 13 is a schematic perspective view of the front portion of a vehicle body frame according to a third example not forming part of the invention but useful for its understanding.
FIG. 14 is a schematic perspective view of the front portion of a vehicle body frame according to a fourth example not forming part of the invention but useful for its understanding.
FIG. 15 is a schematic left side view of a vehicle body frame according to a fifth modification.
FIG. 16 is a schematic left side view of a vehicle body frame according to a sixth modification.
FIG. 17 is a schematic perspective outline view of the front portion of a vehicle body frame according to a seventh modification.
FIG. 18 is a schematic plan view of a vehicle body frame according to an eighth modification.
FIG. 19 is a schematic perspective view of a vehicle body frame according to a ninth modification.

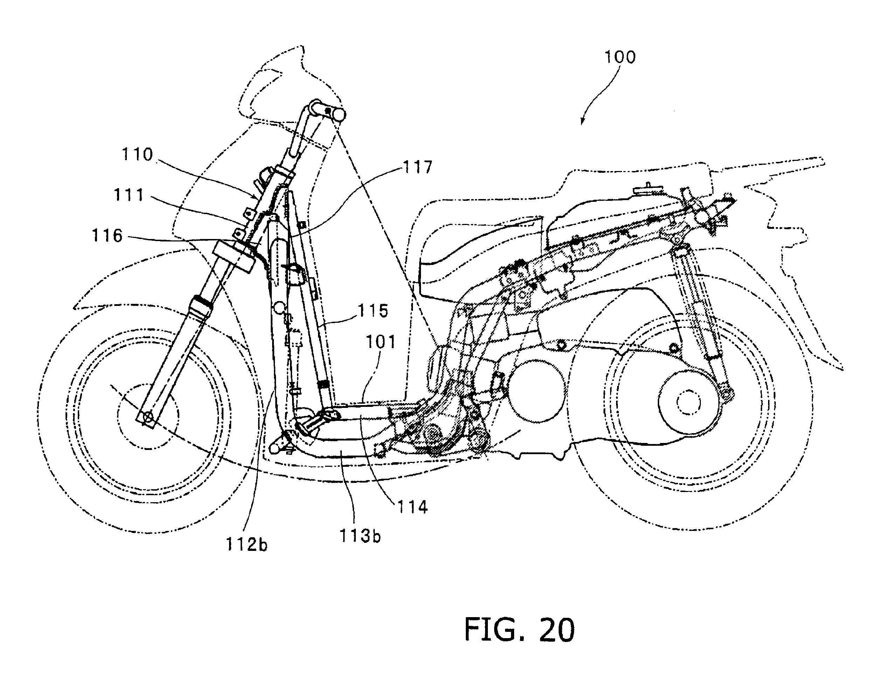

FIG. 20 is a left side view of a motorcycle described in Patent Literature 1.
FIG.21 is a front view of a vehicle body frame of the motorcycle described in Patent Literature 1.

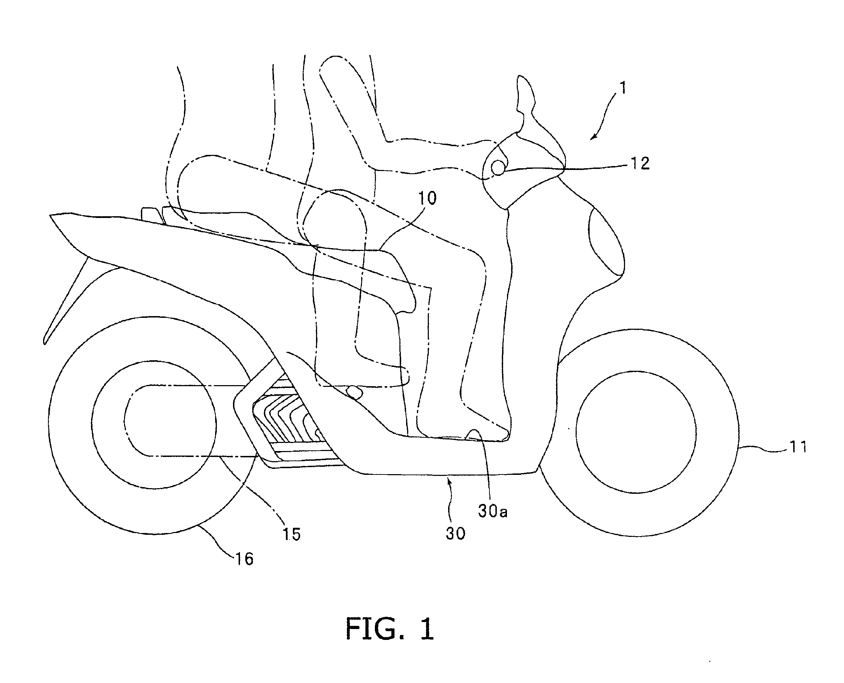

Preferred exemplary embodiments implementing the present invention will be hereinafter explained by exemplifying a motorcycle 1 illustrated in FIG. 1. It should be noted that the directional terms such as "front", "rear", "right" and "left" and their related terms hereinafter refer to directions seen from a rider seated on a seat 10.

The motorcycle 1 illustrated in FIG. 1 is a scooter including an engine 15 of a unit swing type. It should be noted that the motorcycle is not limited to a particular type as long as it includes a foot rest between a down frame and a rear frame in the present invention. For example, the motorcycle 1 may be a motorcycle including an engine fixed to a vehicle body frame in a substantially non-displaceable state.

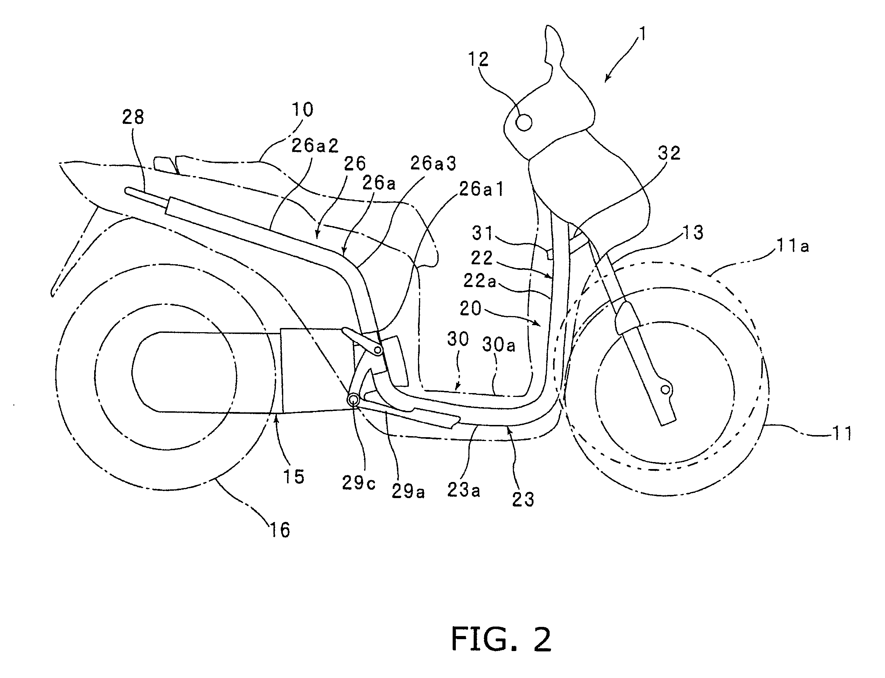

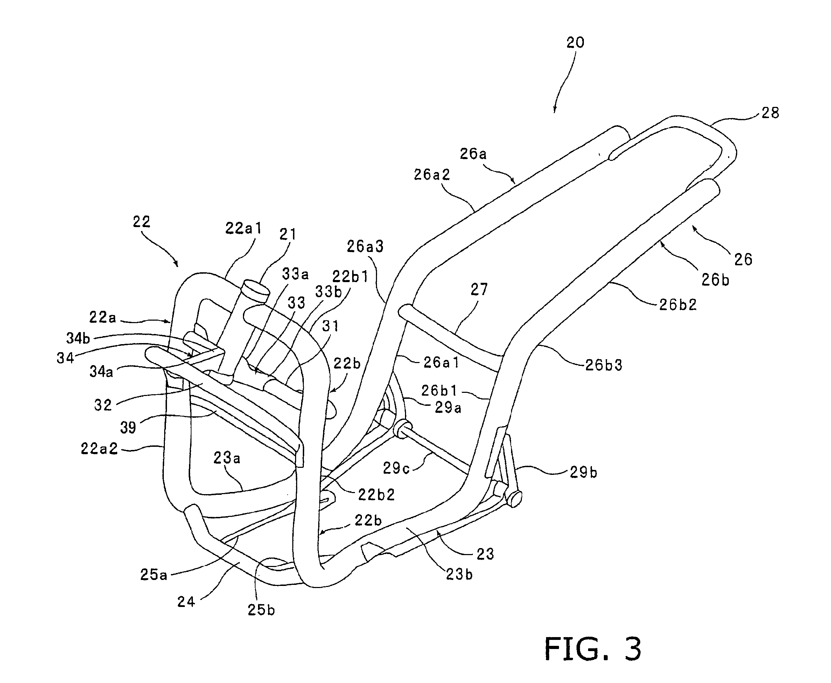

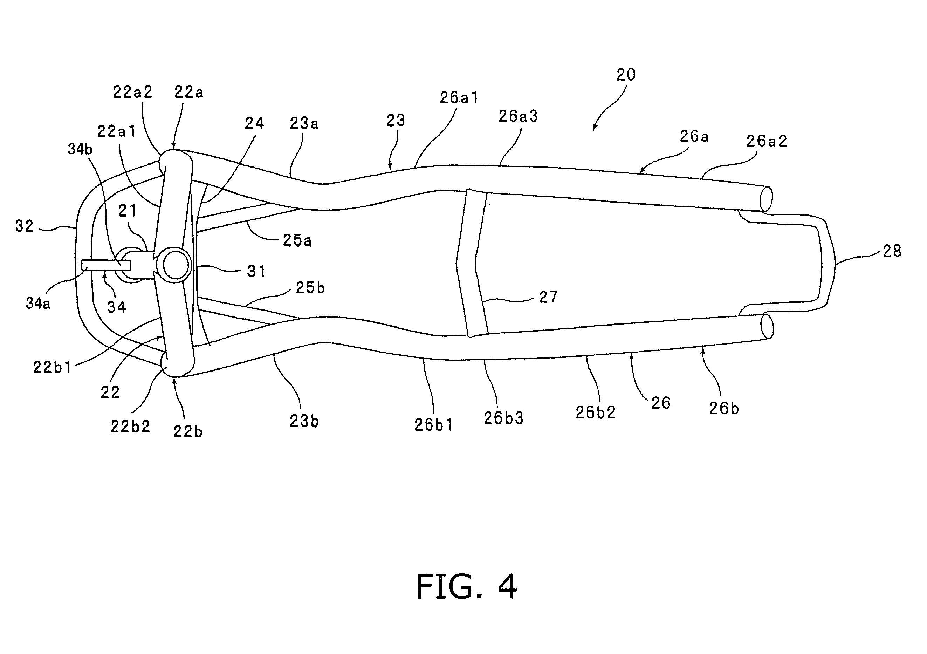

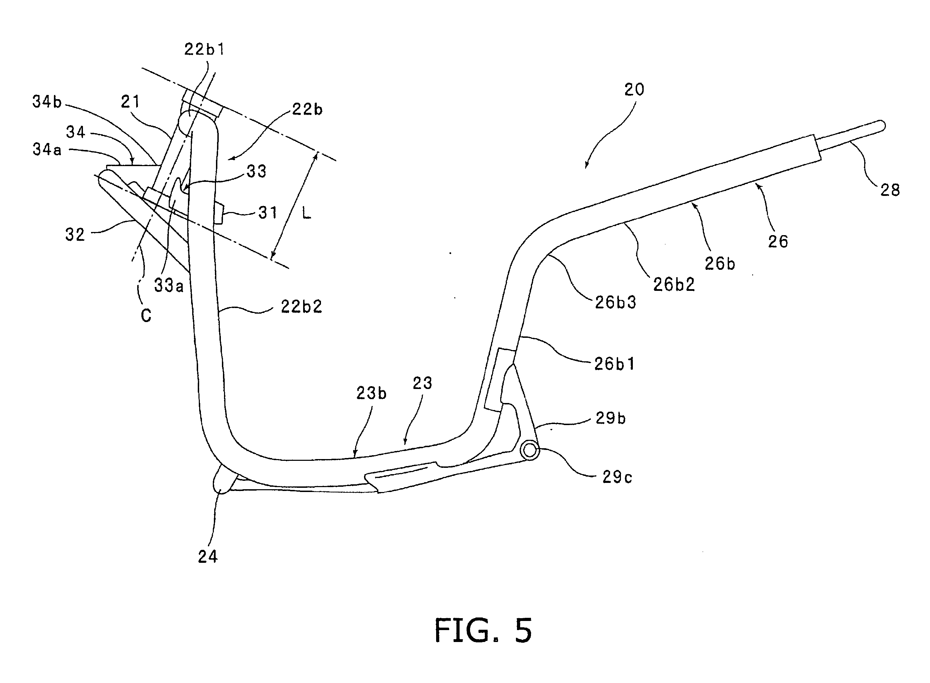

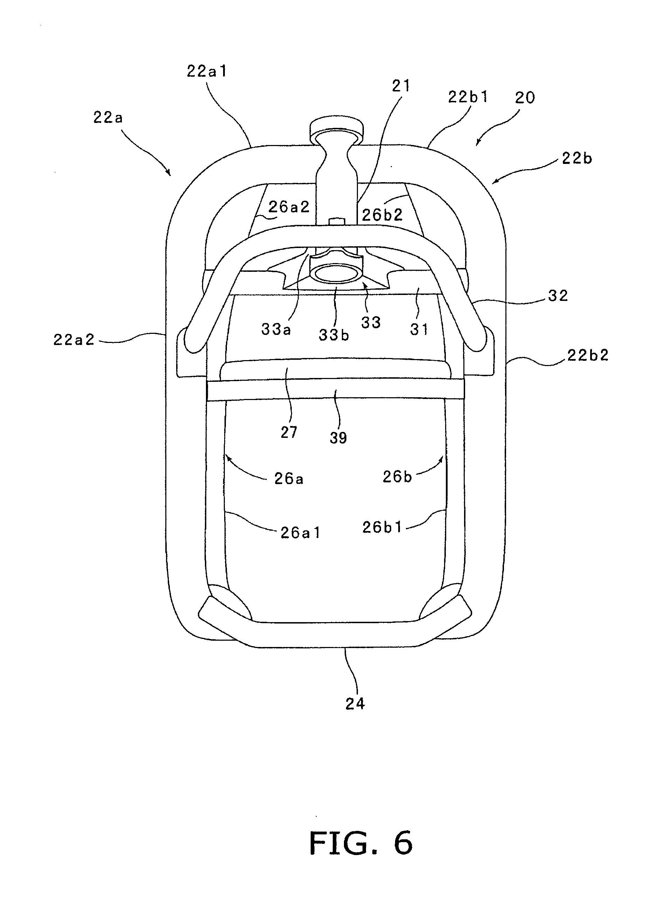

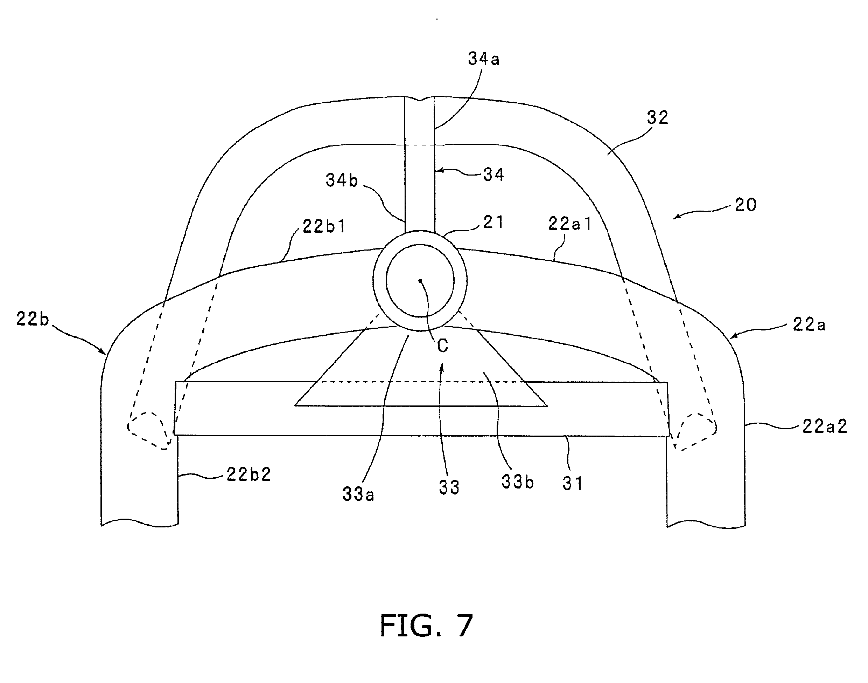

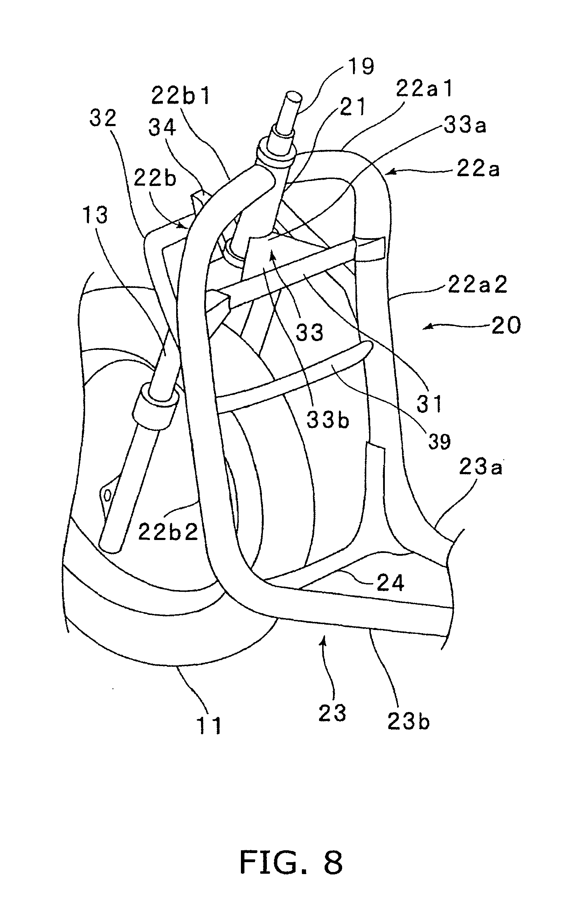

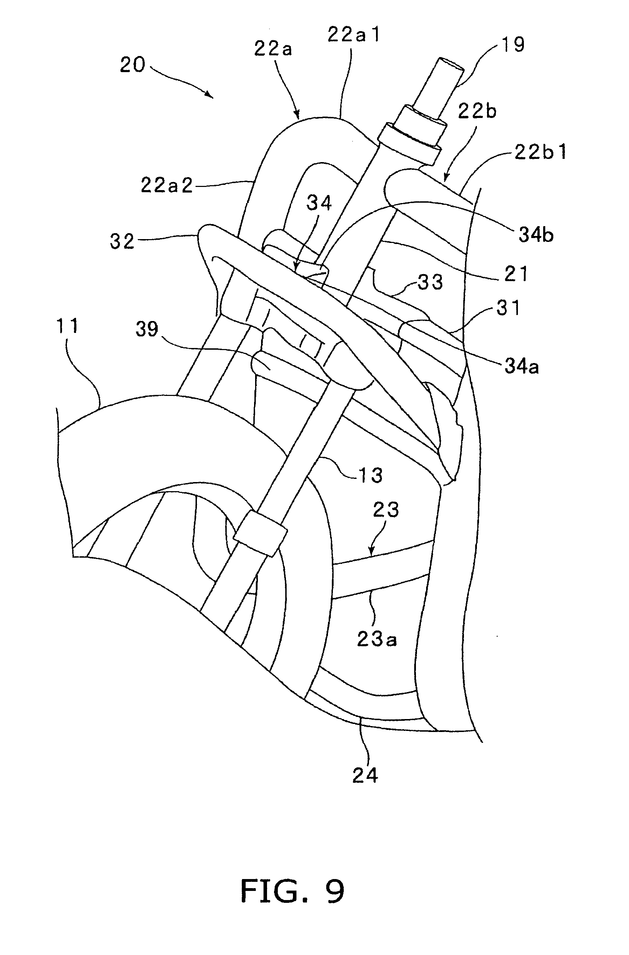

FIG. 1 is a schematic right side view of the motorcycle. FIG. 2 is a schematic right side view of the motorcycle for explaining a vehicle body frame 20. FIG. 3 is a schematic perspective view of the vehicle body frame 20. FIG. 4 is a schematic plan view of the vehicle body frame 20. FIG. 5 is a schematic left side view of the vehicle body frame 20. FIG. 6 is a schematic front view of the vehicle body frame 20. FIG. 7 is a schematic plan view of the front portion of the vehicle body frame 20 seen in an extending direction of the center axis of a head pipe portion 21. FIG. 8 is a schematic perspective view of the vehicle body frame 20 and a front wheel 11 seen from an obliquely left rear side. FIG. 9 is a schematic perspective view of the vehicle body frame 20 and the front wheel 11 seen from an obliquely left front side.

As illustrated in FIG. 2, the motorcycle 1 includes the vehicle body frame 20. As illustrated in FIG. 3, the vehicle body frame 20 includes the head pipe portion 21. The head pipe portion 21 is positioned in the center of the vehicle body frame 20 in a transverse (width) direction of the vehicle. A steering shaft 19, illustrated in FIGS. 8 and 9, is rotatably inserted into the head pipe portion 21. A handle 12 illustrated in FIGS. 1 and 2 and an extendable/contractable (telescopic) front fork 13 illustrated in FIGS. 2, 8 and 9 are connected to the steering shaft 19. The front wheel 11 is rotatably supported by the bottom end portion of the front fork 13.

As illustrated in FIGS. 3 to 9, a down frame 22 is connected to the head pipe portion 21. The down frame 22 is extended downwards from the head pipe portion 21. Specifically, the down frame 22 includes a right down frame portion 22a and a left down frame portion 22b. The down frame 22 does not include a portion positioned in the transverse center of the vehicle body frame 20. In other words, the down frame 22 does not include a portion extended downwards from the head pipe portion 21 in the transverse center of the vehicle body frame 20.

The right down frame portion 22a is connected to the top end portion of the head pipe portion 21. The right down frame portion 22a is roughly horizontally extended rightwards from the top end portion of the head pipe portion 21 and is bent and extended downwards at an intermediate portion thereof. Specifically, the right down frame portion 22a includes a first section 22a1 and a second section 22a2. The first section 22a1 is extended rightwards from the head pipe portion 21. The second section 22a2 is extended downwards from the right end portion of the first section 22a1.

Similarly to the right down frame portion 22a, the left down frame portion 22b is connected to the top end portion of the head pipe portion 21. The left down frame portion 22b is roughly horizontally extended leftwards from the top end portion of the head pipe portion 21, and is bent and extended downwards at an intermediate portion thereof. Specifically, the left down frame portion 22b includes a first section 22b1 and a second section 22b2. The first section 22b1 is extended leftwards from the head pipe portion 21. The second section 22b2 is extended downwards from the left end portion of the first section 22b1.

In the present exemplary embodiment, the first sections 22a1 and 22b1 of the right and left down frame portions 22a and 22b are roughly horizontally extended transversely outwards from the head pipe portion 21. Therefore, a large disposition space can be produced between the right and left down frame portions 22a and 22b in the transverse direction of the vehicle. However, the structures of the right and left down frame portions 22a and 22b are not limited to the above. For example, the right and left down frame portions 22a and 22b may be respectively extended obliquely downwards from the head pipe portion 21.

In the present exemplary embodiment, the right and left down frame portions 22a and 22b are disposed without being overlapped with the front wheel 11 in a front view, as illustrated in FIGS. 2, 8 and 9. In other words, the transverse positions of the right and left down frame portions 22a and 22b are different from the transverse position of the front wheel 11. Specifically, the right down frame portion 22a is disposed rightwards of the front wheel 11 in the transverse direction of the vehicle. On the other hand, the left down frame portion 22b is disposed leftwards of the front wheel 11 in the transverse direction of the vehicle.

As illustrated in the side view of FIG. 2, the right and left down frame portions 22a and 22b are hardly overlapped with the front wheel 11 depicted with a dashed dotted line under the condition that the motorcycle 1 is stopped in a horizontal position. In FIG. 2, the front wheel 11a depicted with a dashed two-dotted line indicates its state when the front fork 13 is most contracted. As illustrated in the side view of FIG. 2, the front wheel 11a is overlapped with the right and left down frame portions 22a and22bwhen the front fork 13 ismost contracted. In other words, at least a portion of the front wheel 11 a is positioned between the right and left down frame portions 22a and 22b in the transverse direction of the vehicle.

A bottom frame 23 is connected to the bottom end portion of the down frame 22. Specifically, a right bottom frame portion 23a is connected to the bottom end portion of the right down frame portion 22a. The right bottom frame portion 23a is roughly horizontally extended rearwards from the bottom end portion of the right down frame portion 22a. Specifically, the right bottom frame portion 23a has a slight downwardly convex shape in a side view. On the other hand, a left bottom frame portion 23b is connected to the bottom end portion of the left down frame portion 22b. The left bottom frame portion 23b is roughly horizontally extended rearwards from the bottom end portion of the left down frame portion 22b. Specifically, the left bottom frame portion 23b has a slight downwardly convex shape in a side view. Further in each of the right and left bottom frame portions 23a and 23b, its longitudinal center portion is positioned transversely inwards of both of its longitudinal ends, as illustrated in FIGS. 3 and 4.

A frame portion 24 connects the connection between the right down frame portion 22a and the right bottom frame portion 23a and the connection between the left down frame portion 22b and the left bottom frame portion 22a. A frame portion 25a connects the frame portion 24 and the longitudinal center portion of the right bottom frame portion 23a, whereas a frame portion 25b connects the frame portion 24 and the longitudinal center portion of the left bottom frame portion 23b. In the present exemplary embodiment, the frame portions 24, 25a and 25b enhance stiffness of the vehicle body frame 20. It should be noted that the frame portions 25a and 25b are not illustrated in FIGS. 8 and 9 for the sake of brevity of illustration. Further, a frame portion 39 connects the right and left down frame portions 22a and 22b.

As illustrated in FIG. 2, a foot rest member 30 is attached to the right and left bottom frame portions 23a and 23b. The foot rest member 30 is a member also referred to as "a foot board". The foot rest member 30 includes a foot rest portion 30a. The foot rest portion 30a is a surface that a rider puts his/her feet thereon when seated on the seat 10. The foot rest portion 30a is positioned over the bottom frame 23. The foot rest portion 30a is positioned between the down frame 22 and a rear frame 26 in the longitudinal direction. The foot rest portion 30a is at least disposed in the transverse center of the vehicle. In the present exemplary embodiment, the foot rest portion 30a has a transversely flat shape. In the present invention, however, the structure of the foot rest portion 30a is not limited to the above. For example, the foot rest portion 30a may include a step. Specifically, the foot rest portion 30a may include a center section, a right section and a left section. The center section is positioned in the transverse center of the foot rest portion 30a. The right section is positioned rightwards of the center section while being positioned lower than the center section. The left section is positioned leftwards of the center section while being positioned lower than the center section. Alternatively, the foot rest portion 30a may not necessarily have a flat shape. For example, the foot rest portion 30a may have a curved surface. Yet further, the foot rest portion 30a may not have a smooth surface. In other words, the foot rest portion 30a may have a convexo-concave surface.

As illustrated in FIGS. 2 to 5, the rear frame 26 is mainly connected to the rear end portion of the bottom frame 23. The rear frame 26 is extended upwards from the rear end portion of the bottom frame 23. Specifically, the rear frame 26 includes a right rear frame portion 26a and a left rear frame portion 26b.

The right rear frame portion 26a is connected to the rear end portion of the right bottom frame portion 23a. The right rear frame portion 26a is extended rearwards and obliquely upwards from the rear end portion of the right bottom frame portion 23a. Specifically, as illustrated in FIG. 2, the right rear frame portion 26a is roughly vertically extended from the rear end portion of the right bottom frame portion 23a, bent rearwards at an intermediate portion thereof, and extended therefrom rearwards and obliquely upwards. Simply put, the right rear frame portion 26a includes a first section 26a1 and a second section 26a2. The first section 26a1 is roughly vertically extended from the rear end portion of the right bottom frame portion 23a, whereas the second section 26a2 is extended rearwards and obliquely upwards from the first section 26a1.

The left rear frame portion 26b is connected to the rear end portion of the right bottom frame portion 23b. The left rear frame portion 26b is extended rearwards and obliquely upwards from the rear end portion of the left bottom frame portion 23b. Specifically, as illustrated in FIG. 5, the left rear frame portion 26b is roughly vertically extended from the rear end portion of the left bottom frame portion 23b, bent rearwards at an intermediate portion thereof, and extended therefrom rearwards and obliquely upwards. Simply put, the left rear frame portion 26b includes a first section 26b1 and a second section 26b2. The first section 26b1 is roughly vertically extended from the rear end portion of the left bottom frame portion 23b, whereas the second section 26b2 is extended rearwards and obliquely upwards from the first section 26b1.

As illustrated in FIG. 2, the seat 10 is disposed over the second sections 26a2 and 26b2 of the right and left rear frame portions 26a and 26b. The seat 10 is directly or indirectly attached to the right and left rear frame portions 26a and 26b. As illustrated in FIG. 1, the seat 10 is a tandem seat allowing two people (i.e., a rider and a passenger) to be seated thereon.

As illustrated in FIG. 3, a frame portion 27 connects a connection 26a3 between the first and second sections 26a1 and 26a2 of the right rear frame portion 26a and a connection 26b3 between the first and second sections 26b1 and 26b2 of the left rear frame portion 26b. Similarly to the aforementioned frame portions 24, 25a and 25b, the frame portion 27 is a member for enhancing torsional stiffness of the vehicle body frame 20.

Further, a frame portion 28 connects the rear end portion of the right rear frame portion 26a and the rear end portion of the left rear frame portion 26b.

A bracket 29a is attached to the right rear frame portion 26a, whereas a bracket 29b is attached to the left rear frame portion 26b. A transversely extended pivot shaft 29c is attached to the brackets 29a and 29b. The engine 15 of a unit swing type, illustrated in FIG. 1, is pivotably attached to the pivot shaft 29c. The engine 15 includes an output shaft (not illustrated in the figures). The output shaft supports a rear wheel 16 for allowing it to rotate.

It should be noted that most of the members forming the vehicle body frame 20 are formed by steel pipes in the present exemplary embodiment. However, the structure of the vehicle body frame 20 is not limited to the above in the present invention. For example, the vehicle body frame 20 may be formed by die casting. Further, the vehicle body frame 20 may be made of aluminum, aluminum alloy, or magnesium alloy, for instance.

Next, the structures of the head pipe portion 21 and its periphery in the vehicle body frame 20 will be explained in detail with reference to FIGS. 3 to 9. The vehicle body frame 20 includes a first cross frame portion 31 and a second cross frame portion 32. Each of the first and second cross frame portions 31 and 32 connects the right and left down frame portions 22a and 22b. In the present exemplary embodiment, stiffness of the first and second cross frame portions 31 and 32 is set to be lower than that of the right and left down frame portions 22a and 22b.

As mainly illustrated in FIG. 7, the first cross frame portion 31 specifically connects the right and left down frame portions 22a and 22b while passing through the rear of the head pipe portion 21 in a view of an extending direction of a center axis C of the head pipe portion 21. Further, the first cross frame portion 31 is also connected to the head pipe portion 21. In the present exemplary embodiment, the first cross frame portion 31 is indirectly connected to the head pipe portion 21 through a connection frame portion 33 connected to the bottom end portion of the head pipe portion 21 while being positioned rearwards of the head pipe portion 21. In the present invention, however, the structure of the first cross frame portion 31 is not limited to the above. For example, the first cross frame portion may be directly connected to the head pipe portion. It should be noted that the first cross frame portion 31 has a linear shape in the present exemplary embodiment. In the present invention, however, the first cross frame portion may have a curved shape or a bulged shape. In this case, the first cross frame portion preferably has a backwardly convex shape in a view of the extending direction of the center axis C of the head pipe portion 21.

As illustrated in FIG. 5, the first cross frame portion 31 is disposed within a region L ranging from the top end to the bottom end of the head pipe portion 21 in the extending direction of the center axis C of the head pipe portion 21. Both of a connection 33a between the connection frame portion 33 and the head pipe portion 21 and a connection 33b (see FIGS. 3 and 6) between the connection frame portion 33 and the first cross frame portion 31 are positioned within the region L.

As illustrated in FIG. 7, the second cross frame portion 32 connects the right down frame portion 22a and the left down frame portion 22b while passing through the front of the head pipe 21 in a view of the extending direction of the center axis C of the head pipe portion 21. Further, the second cross frame portion 32 is also connected to the head pipe portion 21. In the present exemplary embodiment, the second cross frame portion 32 is indirectly connected to the head pipe portion 21 through a connection frame portion 34. The connection frame portion 34 is connected to the bottom end portion of the head pipe portion 21 while being positioned forwards of the head pipe portion 21. In the present invention, however, the structure of the second cross frame portion is not limited to the above. For example, the second cross frame portion may be directly connected to the head pipe portion. The connection between the second cross frame portion 32 and the head pipe portion 21, i.e., the connection between the second cross frame portion 32 and the connection frame portion 34 is positioned within the region L. On the other hand, the connections between the second cross frame portion 32 and the right and left down frame portions 22a and 22b are positioned outside the region L. In other words, only the upper portion of the second cross frame portion 32 is disposed within the region L.

As illustrated in FIG. 5, both of a connection 34b between the connection frame portion 34 and the head pipe portion 21 and a connection 34a between the second cross frame portion 32 and the connection frame portion 34 are disposed within the region L in the extending direction of the center axis C of the head pipe portion 21.

In the present exemplary embodiment, the right and left down frame portions 22a and 22b are connected to the top end portion of the head pipe portion 21 whereas the connections 33a and 34b are connected to the bottom end portion of the head pipe portion 21, as described above and illustrated in FIG. 5. In the present invention, however, the positions of the connections between the head pipe portion and the right and left down frame portions and the positions of the connections between the head pipe portion and the connection frame portions are not particularly limited as long as the connections between the head pipe portion and the right and left down frame portions are positioned higher than the connections between the head pipe portion and the connection frame portions.

In the motorcycle 100 described in the aforementioned Patent Literature 1, for instance, existence of the center frame portion 115 is the cause of the longitudinally short length of the foot rest. However, the center frame portion 115 is considered as an essential member of the motorcycle 100 for sufficiently ensuring stiffness. Therefore, the center frame portion 115 cannot be removed from the motorcycle 100 for extending the longitudinal length of the foot rest.

In view of the above, the inventors of the present invention found that a high stiffness vehicle body frame without a center frame portion can be implemented by adopting a new design concept of a vehicle body frame different from the design concepts of the well-known vehicle body frames.

This will be hereinafter explained in more detail.

As described above, the motorcycle 100 described in Patent Literature 1 is provided with the gusset 116 for enhancing stiffness of the connections between the head pipe 111 and the right and left down frame portions 112a and 112b. Further, the right and left down frame portions 112a and 112b are responsible for both functions of achieving sufficient stiffness and strength. In this structure, the right and left down frame portions 112a and 112b are required to have both remarkably high stiffness and remarkably high strength. Accordingly, each of the right and left down frame portions 112a and 112b is required to be formed by a thick-walled pipe with a remarkably large diameter. In response, the center frame portion 115 and the cross frame portion 114 are provided to the right and left down frame portions 112a and 112b as reinforcement members. In other words, the motorcycle 100 sufficiently achieves both stiffness and strength of the vehicle body frame using the right and left down frame portions 112a and 112b, the center frame portion 115 and the cross frame portion 114.

Thus, the well-known vehicle body frames have been generally designed to rigidly fix the head pipe and the down frame using the gusset and sufficiently achieve both stiffness and strength of the vehicle body frame with a portion of the vehicle body frame positioned in the downstream of the head pipe portion and its periphery.

In this case, however, each down frame portion is required to be formed by a thick-walled pipe with a remarkably large diameter. Alternatively, a reinforcement member (or members) is required to be separately provided for the down frame portions. Therefore, it has been difficult to form the foot rest with a large longitudinal length. Further, the weight of the vehicle body frame has been likely to be increased in response to the above requirement.

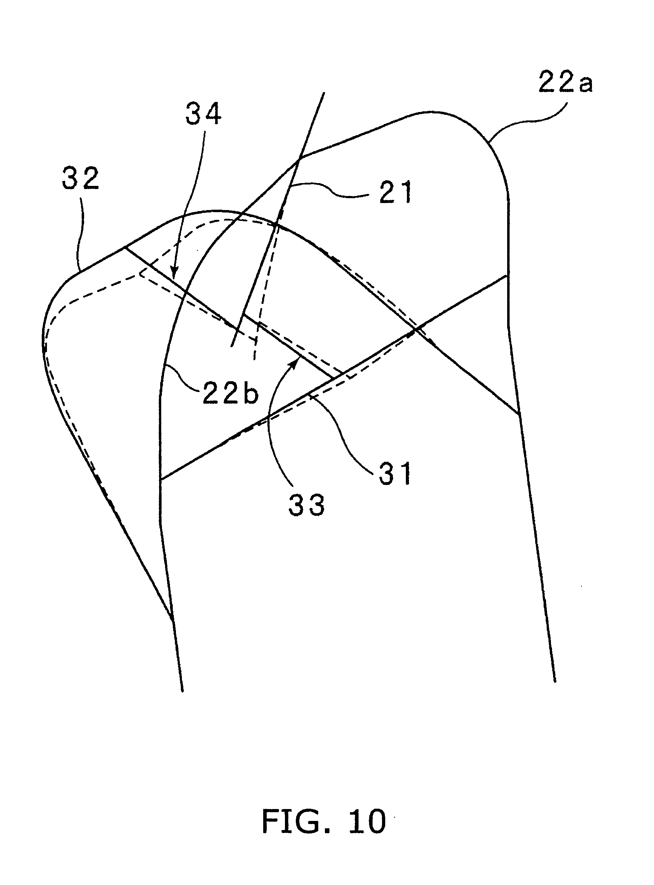

In view of the above, the inventors of the present invention have reached a completely new design concept of the vehicle body frame. Specifically, the inventors reached a design concept of sufficiently achieving strength of the vehicle body frame by the structure of the head pipe portion and its periphery and sufficiently achieving stiffness of the vehicle body frame by the down frame portions. More specifically, the first and second cross frame portions 31 and 32 are provided in the present exemplary embodiment. The first and second cross frame portions 31 and 32 pass through the front or rear of the head pipe portion 21, connect the right and left down frame portions 22a and 22b, and are connected to the head pipe portion 21. When external force is applied to the front wheel 11 in the rearward direction, for instance, the first and second cross frame portions 31 and 32 are deformed. Thus, the external force applied to the vehicle body frame 20 is mitigated by the first and second cross frame portions 31 and 32 herein provided. Specifically, when external force is applied to the front wheel 11 in the rearward direction, the bottom end portion of the head pipe portion 21 moves rearwards and the head pipe portion 21 is accordingly bowed in a circular-arc shape as illustrated in FIG. 10. When the head pipe portion 21 is thus deformed, the first and second cross frame portions 31 and 32 connected to the head pipe portion 21 are accordingly deformed. The external force applied to the vehicle body frame 20 is thereby mitigated. Therefore, stiffness and strength of the vehicle body frame can be sufficiently enhanced without providing the center frame portion to be used for reinforcing the right and left down frame portions. It should be noted that a solid line in FIG. 10 depicts the vehicle body frame 20 under the condition that external force is not being applied to the front wheel 11 in the rearward direction. By contrast, a dashed line in FIG. 10 depicts the vehicle body frame 20 under the condition that external force is being applied to the front wheel 11 in the rearward direction.

Further, the center frame portion is not necessary for the present exemplary embodiment. The longitudinal size of the foot rest portion 30a can be thereby increased by that much. In other words, stiffness of the vehicle body frame 20 can be kept high and the longitudinal size (length) of the foot rest portion 30a can be long by using the structure of the vehicle body frame 20 of the present exemplary embodiment.

Further in the present exemplary embodiment, the right and left down frame portions 22a and 22b are disposed without being overlapped with the front wheel 11 in a front view. Yet further, the front wheel 11 is disposed to be overlapped with the right and left down frame portions 22a and 22b in a side view when the front fork 13 is most contracted. Therefore, the right and left down frame portions 22a and 22b can be disposed forwards as much as possible. Consequently, the longitudinal size (length) of the foot rest portion 30a can be increased as much as possible without increasing the wheel base length of the motorcycle 1. The stroke length of the front fork 13 can be also increased.

To further enhance an external-force mitigating effect by the first and second cross frame portions 31 and 32, it is preferable to increase the distance between the connections between the head pipe portion 21 and the right and left down frame portions 22a and 22b and the connections 33a and 34b between the head pipe portion 21 and the connection frame portions 33 and 34 in the extending direction of the center axis C of the head pipe portion 21. Specifically, it is preferable to connect the right and left down frame portions 22a and 22b to the top end portion of the head pipe portion 21 and connect the connection frame portions 33 and 34 to the bottom end portion of the head pipe portion 21, as seen in the present exemplary embodiment. With the structure, greater external force can be applied to the first and second cross frame portions 31 and 32. The first and second cross frame portions 31 and 32 can be thereby further largely deformed. In other words, it is possible to more effectively mitigate external force to be applied to the vehicle body frame 20.

Further in the present exemplary embodiment, each of the first and second cross frame portions 31 and 32 has a stiffness lower than that of each of the right and left down frame portions 22a and 22b. Therefore, the first and second cross frame portions 31 and 32 are further easily deformed when external force is applied to the head pipe portion 21. Therefore, it is possible to further effectively mitigate external force to be applied to the vehicle body frame 20.

Further in the present exemplary embodiment, the connections between the head pipe portion 21 and the right and left down frame portions 22a and 22b are not reinforced by a gusset. Therefore, the first and second cross frame portions 31 and 32 are further easily deformed when external force is applied to the head pipe portion 21. Therefore, it is possible to further effectively mitigate external force to be applied to the vehicle body frame 20.

Further in the present exemplary embodiment, the first cross frame portion 31 is positioned within the region L, as illustrated in FIG. 5. Therefore, the first and second cross frame portions 31 and 32 are further easily deformed when external force is applied to the head pipe portion 21. Therefore, it is possible to further effectively mitigate external force to be applied to the vehicle body frame 20.

Modifications of the present invention will be hereinafter explained. It should be noted that the same reference numerals will be assigned to the components having substantially the same functions as those of the components of the aforementioned exemplary embodiment, and explanation thereof will be hereinafter omitted.

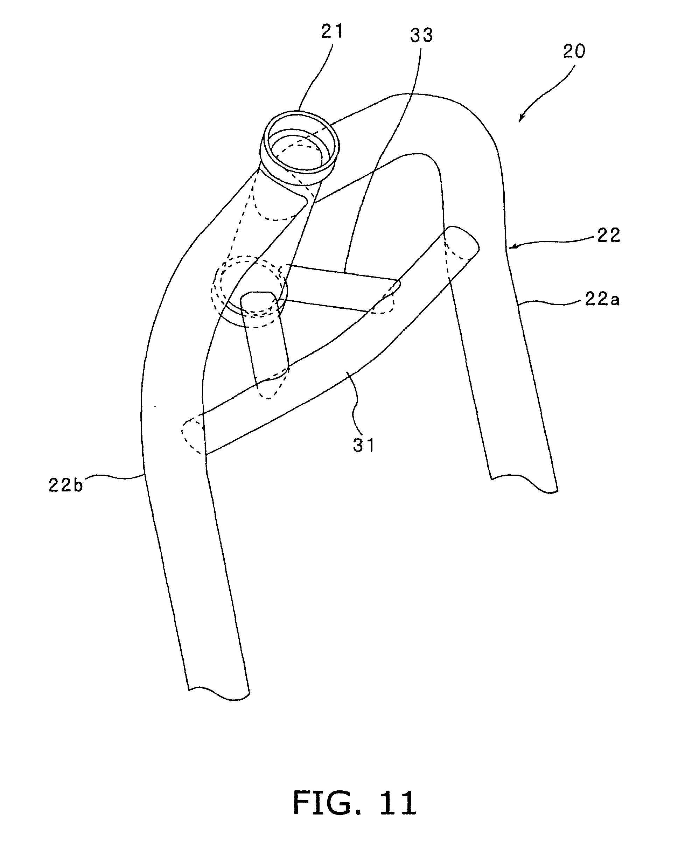

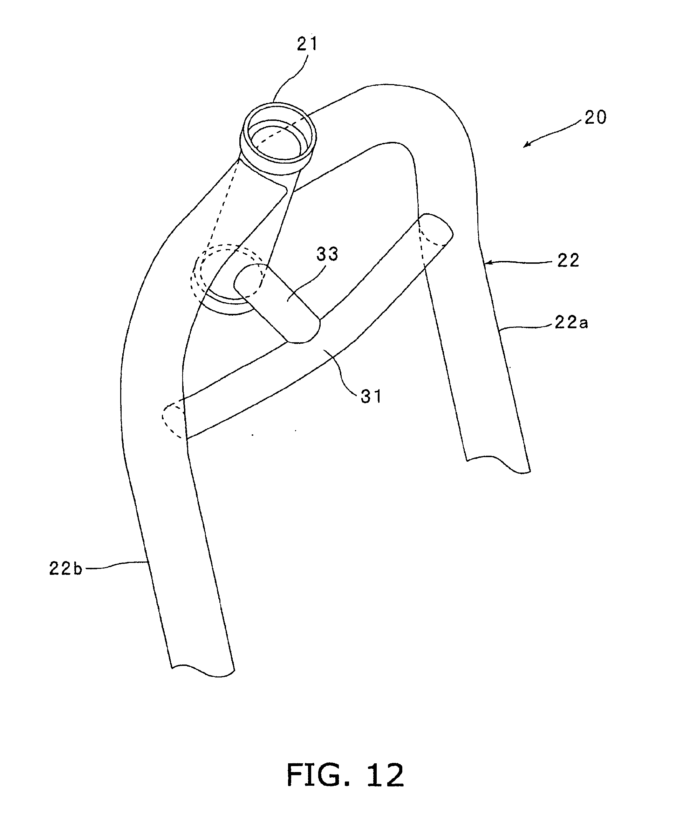

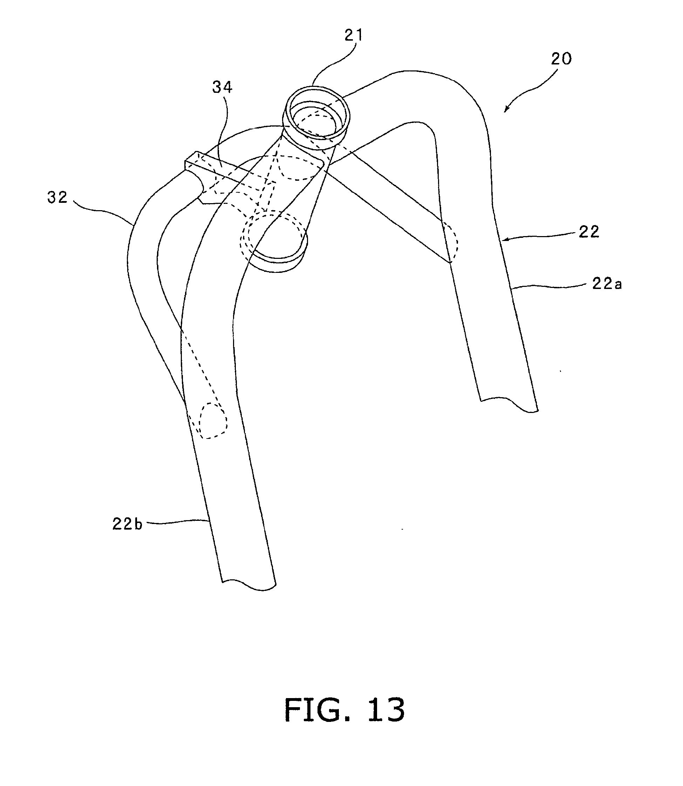

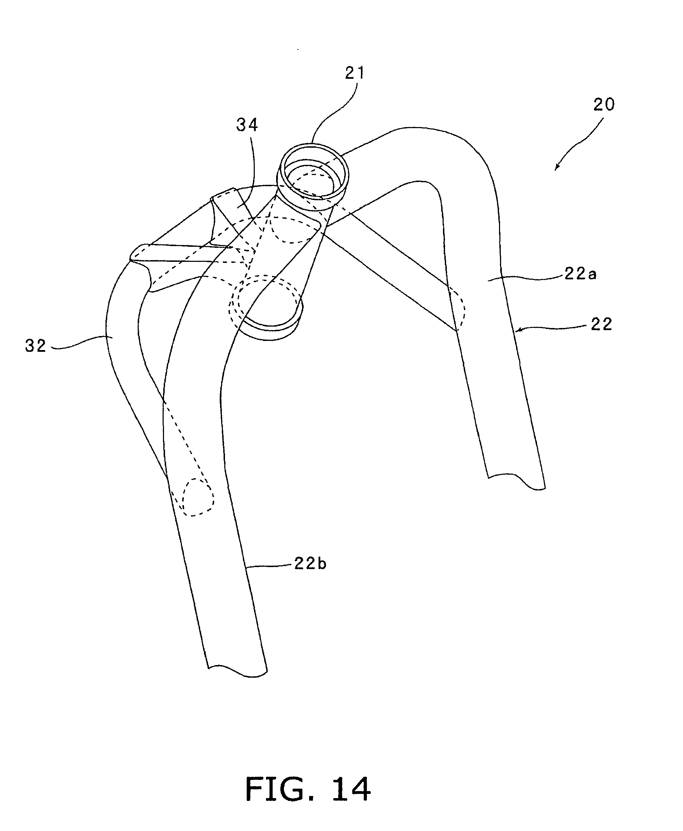

FIG. 11 is a schematic perspective view of the front portion of the vehicle body frame according to a first example not forming part of the invention but useful for its understanding. FIG. 12 is a schematic perspective view of the front portion of the vehicle body frame according to a second example not forming part of the invention but useful for its understanding. FIG. 13 is a schematic perspective view of the front portion of the vehicle body frame according to a third example not forming part of the invention but useful for its understanding. FIG. 14 is a schematic perspective viewof the front portion of the vehicle body frame according to a fourth example not forming part of the invention but useful for its understanding.

The aforementioned exemplary embodiment has exemplified a case that both of the first and second cross frame portions 31 and 32 are provided. In the present example not forming part of the invention but useful for its understanding, however, both of the first and second cross frame portions 31 and 32 are not necessarily provided. For example, only either of the first and second cross frame portions 31 and 32 may be provided. Specifically, only the first cross frame portion 31 may be provided as illustrated in FIGS. 11 and 12, for instance. Alternatively, only the second cross frame portion 32 may be provided as illustrated in FIGS. 13 and 14. The aforementioned external-force mitigating effect can be achieved as long as at least either of the first and second cross frame portions 31 and 32 is provided. Therefore, it is possible to enhance stiffness of the vehicle body frame 20 and simultaneously increase the longitudinal size (length) of the foot rest portion 30a.

It is herein preferable to provide the first cross frame portion 31 when only either of the first and second cross frame portions 31 and 32 is provided. This is because of the reason that strength of the head pipe portion 21 and its periphery can be more easily enhanced by providing the first cross frame portion 31 than by providing the second cross frame portion 32.

Further, the structures of the connection frame portions 33 and 34 are not particularly limited as long as external force can be transmitted to the first and second cross frame portions 31 and 32. For example, the connection frame portion 33 may be formed by a plurality of pipes as illustrated in FIG. 11. Alternatively, the connection frame portion 33 may be formed by a single pipe as illustrated in FIG. 12.

The connection frame portion 34 may be formed by either a single frame section as illustrated in FIG. 13 or a plurality of frame sections as illustrated in FIG. 14.

Further, each of the first and second cross frame portions 31 and 32 may be directly connected to the head pipe portion 21 without providing the connection frame portions 33 and 34.

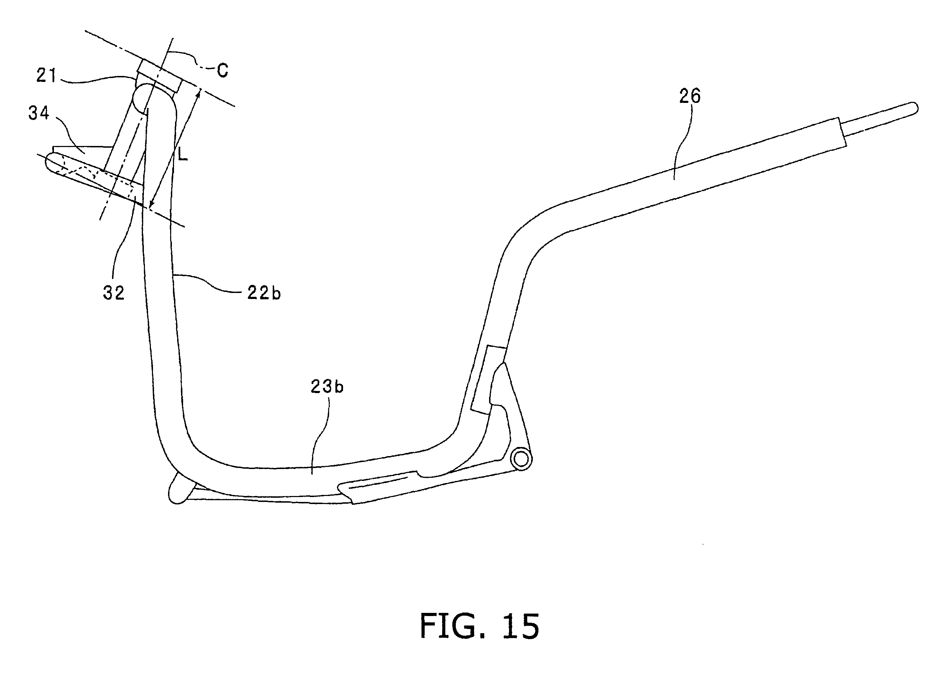

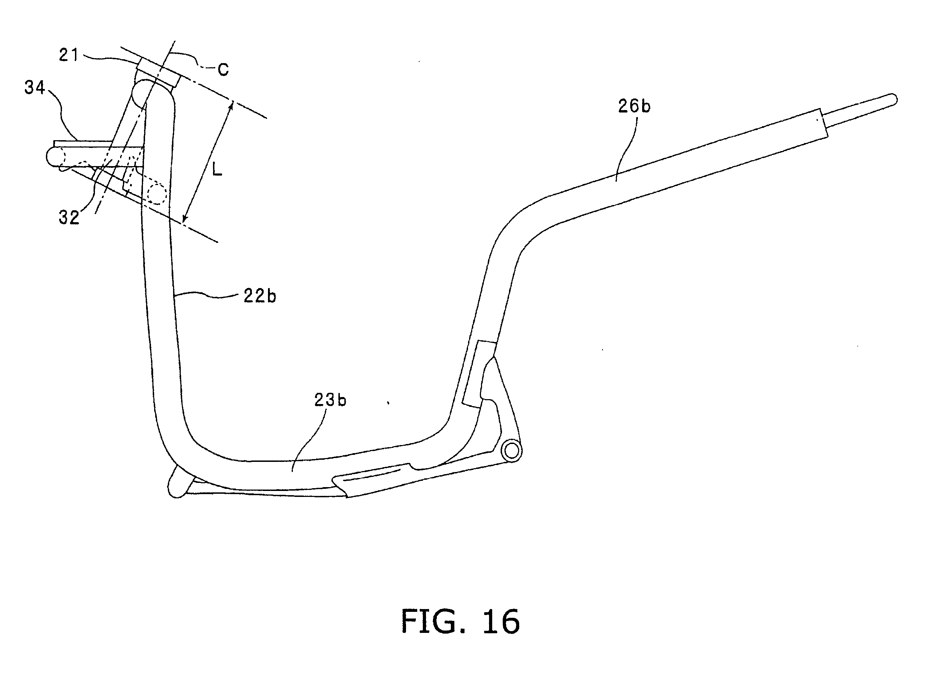

FIG. 15 is a schematic left side view of the vehicle body frame according to a fifth modification. FIG. 16 is a schematic left side view of the vehicle body frame according to a sixth modification.

The aforementioned exemplary embodiment exemplifies a case that the second cross frame portion 32 is not disposed within the region L. In the present invention, however, the structure of the second cross frame portion 32 is not limited to the above. For example, the second cross frame portion 32 may be disposed within the region L as illustrated in FIGS. 15 and 16. Specifically, the connections between the second cross frame portion 32 and the right and left down frame portions 22a and 22b may be positioned at the same height as the bottom end of the head pipe portion 21 as illustrated in FIG. 15. Alternatively, the connections between the second cross frame portion 32 and the right and left down frame portions 22a and 22b may be positioned higher than the bottom end of the head pipe portion 21 as illustrated in FIG. 16.

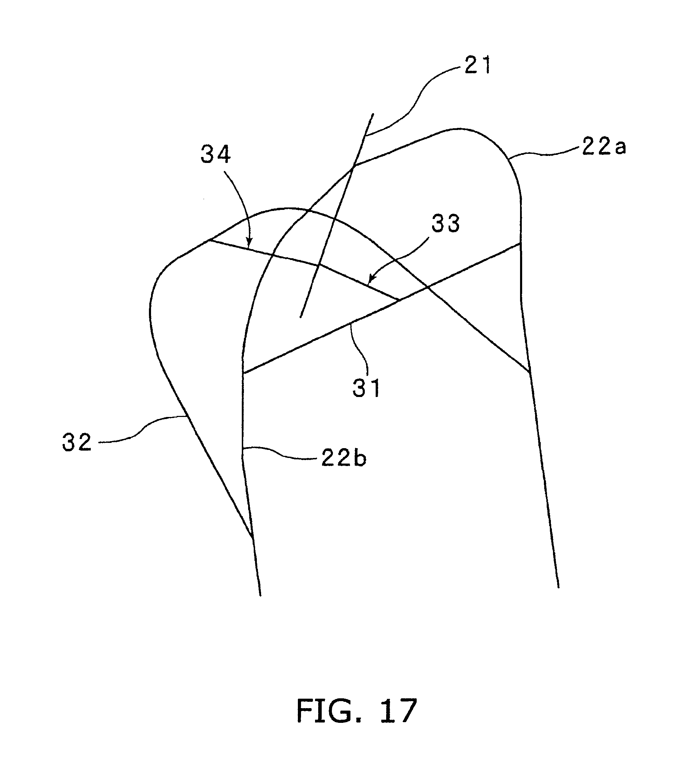

FIG. 17 is a schematic perspective outline view of the vehicle body frame according to a seventh modification.

As illustrated in FIG. 5, the aforementioned exemplary embodiment has exemplified a case that the right and left down frame portions 22a and 22b are connected to the top end portion of the head pipe portion 21 while the connections 33a and 34b are connected to the bottom end portion of the head pipe portion 21. In the present invention, however, the positions of the connections between the head pipe portion and the right and left down frame portions and the positions of the connections between the head pipe portion and the connection frame portions are not particularly limited as long as the connections between the head pipe portion and the right and left down frame portions are positioned higher than the connections between the head pipe portion and the connection frame portions.

For example, each of the right and left down frame portions 22a and 22b may be connected to a portion of the head pipe portion 21 that is positioned lower than the top end portion of the head pipe portion 21, as illustrated in FIG. 17. Further, the connection frame portions 33 and 34 may be connected to a portion of the head pipe portion 21 that is higher than the bottom end portion of the head pipe portion 21.

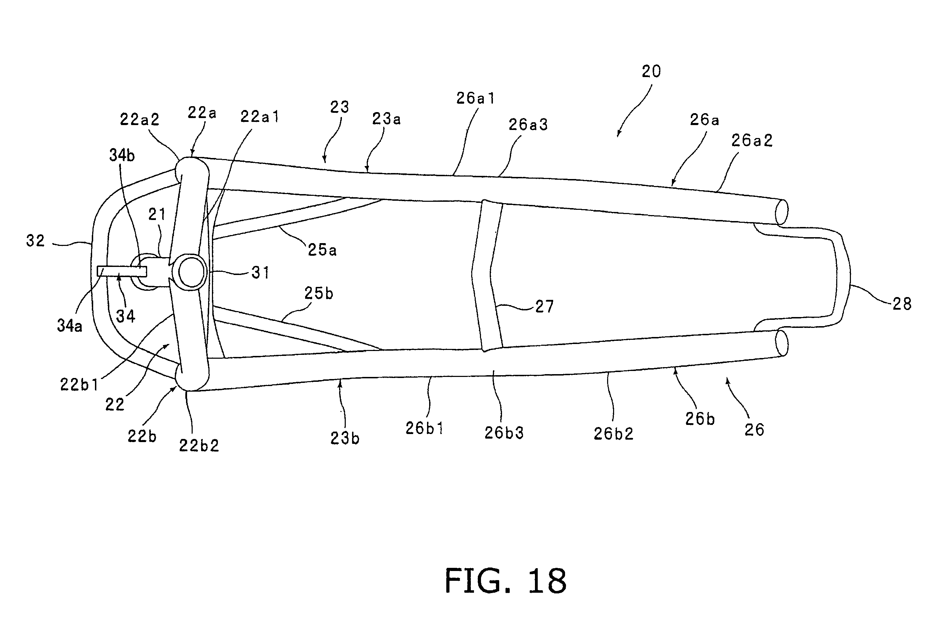

FIG. 18 is a schematic plan view of the vehicle body frame acco rding to an eighth modification.

The aforementioned exemplary embodiment has exemplified a case that each of the right and left bottom portions 23a and 23b is bent. In the present invention, however, the structures of the right and left bottom portions 23a and 23b are not limited to the above. For example, each of the right and left bottom frame portions 23a and 23b may have a linear shape as illustrated in FIG. 18.

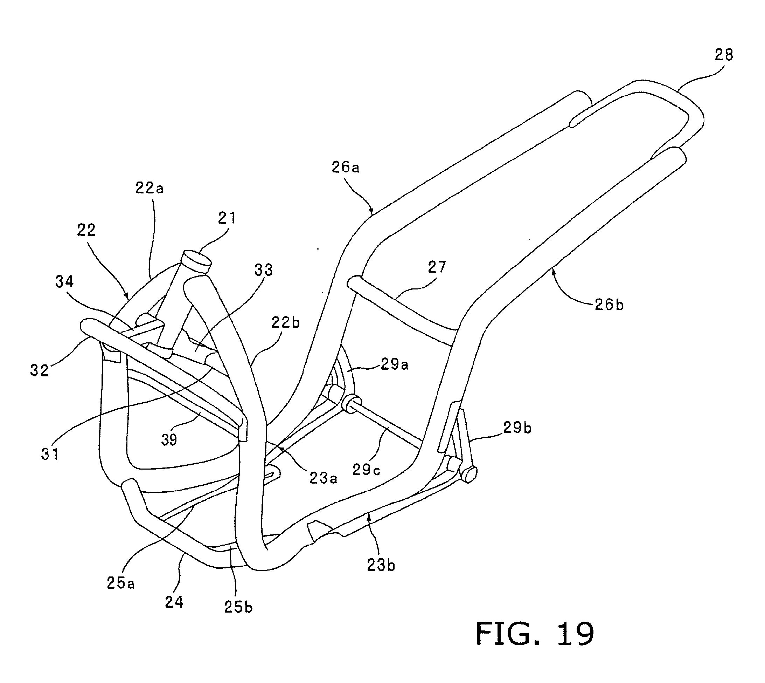

FIG. 19 is a schematic perspective view of the vehicle body frame according to a ninth modification.

The aforementioned exemplary embodiment has exemplified a case that each of the right and left down frame portions 22a and 22b is horizontally extended transversely outwards from the head pipe portion 21, bent thereafter, and extended therefrom downwards. In the present invention, however, the structures of the right and left down frame portions 22a and 22b are not limited to the above. For example, each of the right and left down frame portions 22a and 22b may be extended transversely outwards and obliquely downwards from the head pipe portion 21 as illustrated in FIG. 19.

According to the present invention, it is possible to provide a high stiffness motorcycle vehicle body frame which would allow a motorcycle to have a foot rest with a large longitudinal size. [0070]
- 1: Motorcycle
- 10: Seat
- 11: Front wheel
- 13: Front fork
- 19: Steering shaft
- 20: Vehicle body frame
- 21: Head pipe portion
- 22: Down frame portion
- 22a: Right down frame portion
- 22b: Left down frame portion
- 23: Bottom frame portion
- 26: Rear frame portion
- 30a: Foot rest portion
- 31: First cross frame portion
- 32: Second cross frame portion

## Claims

1. A motorcycle vehicle body frame (20), comprising:
a head pipe portion (21) positioned in a transverse center of the motorcycle vehicle body frame (20);
a down frame portion (22) connected to the head pipe portion (21), the down frame portion (22) extended downwards from the head pipe portion (21);
a bottom frame portion (23) extended rearwards from a bottom end portion of the down frame portion (22); and
a rear frame portion (26) extended upwards from a rear end portion of the bottom frame portion (23);
wherein the down frame portion (22) includes a right down frame portion (22a) and a left down frame portion (22b),
the motorcycle vehicle body frame (20) further comprises a first cross frame portion (31) connected to the head pipe portion (21), the first cross frame portion (31) connecting the right (22a) and left (22b) down frame portions, the first cross frame portion (31) passing through a rear of the head pipe portion (21) in a view of an extending direction of a center longitudinal axis (C) of the head pipe portion (21), and
a connection between the head pipe portion (21) and the right down frame portion (22a) and a connection between the head pipe portion (21) and the left down frame portion (22b) are positioned higher than a connection between the head pipe portion (21) and the first cross frame portion (31),
**characterized by**
a second cross frame portion (32) connected to the head pipe portion (21), the second cross frame portion (32) connecting the right down frame portion (22a) and the left down frame portion (22b), the second cross frame portion (32) passing through the front of the head pipe portion (21) in the view of the extending direction of the center longitudinal axis (C) of the head pipe portion (21),
wherein the connections between the head pipe portion (21) and the down frame portions (22a, 22b) are positioned higher than a connection between the head pipe portion (21) and the second cross frame portion (32).

2. The motorcycle vehicle body frame (20) according to claim 1, wherein the down frame portion (22) does not include a portion positioned in the transverse center of the motorcycle vehicle body frame (20).

3. The motorcycle vehicle body frame (20) according to claim 1 or 2, wherein the first cross frame portion (31) is directly connected to the head pipe portion (21).

4. The motorcycle vehicle body frame (20) according to claim 1 or 2, wherein the first cross frame portion (31) is indirectly connected to the head pipe portion (21) through a connection frame portion (33) connected to a bottom end portion of the head pipe portion (21) while being positioned rearwards of the head pipe portion (21).

5. The motorcycle vehicle body frame (20) according to claim 4, wherein the connection frame portion (33) is formed by a single portion.

6. The motorcycle vehicle body frame (20) according to claim 4, wherein the connection frame portion (33) is formed by a plurality of portions.

7. The motorcycle vehicle body frame (20) according to any of claims 1 to 6, wherein each of the right (22a) and left (22b) down frame portions is connected to a top end portion of the head pipe portion (21).

8. The motorcycle vehicle body frame (20) according to any of claims 1 to 7, wherein the first cross frame portion (31) is positioned between a top end of the head pipe portion (21) and a bottom end of the head pipe portion (21) in the extended direction of the center longitudinal axis(C) of the head pipe portion (21).

9. The motorcycle vehicle body frame (20) according to any of claims 1 to 8. wherein each of the right (22a) and left (22b) down frame portions includes: a first section (22a1, 22b1) horizontally extended transversely outwards from the head pipe portion (21); and a second section (22a2, 22b2) extended downwards from a transversely outward end portion of the first section (22a1, 22b1).

10. The motorcycle vehicle body frame (20) according to any of claims 1 to 9, wherein the first cross frame portion (31) has a stiffness lower than a stiffness of each of the right (22a) and left (22b) down frame portions.

11. A motorcycle (1), comprising:
a motorcycle vehicle body frame (20) according to one of claims 1 to 10;
a steering shaft (19) rotatably inserted into the head pipe portion (21);
a front fork (13) connected to the steering shaft (19);
a front wheel (11) rotatably supported by the front fork (13);
a seat (10) disposed over the rear frame portion (26); and
a foot rest (30a) disposed over the bottom frame portion (23), the foot rest (30a) positioned between the down frame portion (22) and the rear frame portion (26) in a longitudinal direction of the motorcycle (1), the foot rest (30a) positioned at least in a transverse center of the motorcycle (1).

12. The motorcycle (1) according to claim 11, wherein the right (22a) and left (22b) down frame portions are disposed without being overlapped with the front wheel (11) in a front view.

13. The motorcycle (1) according to claim 11 or 12,
wherein the front fork (13) is allowed to be extended and contracted, and
the front wheel (11) is configured to be overlapped with the right (22a) and left (22b) down frame portions in a side view when the front fork (13) is most contracted.

## Patentansprüche

1. Motorrad- Fahrzeugkarosserierahmen (20), aufweisend:
einen Kopfrohrabschnitt (21), positioniert in einer Quermitte des Fahrzeugkarosserierahmens (20);
einen unteren Rahmenabschnitt (22), verbunden mit dem Kopfrohrabschnitt (21),
wobei sich der untere Rahmenabschnitt (22) nach unten von dem Kopfrohrabschnitt (21) erstreckt;
einen Bodenrahmenabschnitt (23), erstreckt von einem Bodenendabschnitt des unteren Rahmenabschnittes (22) nach hinten; und
einen hinteren Rahmenabschnitt (26), erstreckt von einem hinteren Endabschnitt des Bodenrahmenabschnittes (23) nach oben;
wobei der untere Rahmenabschnitt (22) einen rechten unteren Rahmenabschnitt (22a) und einen linken unteren Rahmenabschnitt (22b) enthält,
wobei der Motorrad- Fahrzeugkarosserierahmen (20) außerdem aufweist einen ersten Querrahmenabschnitt (31), verbunden mit dem Kopfrohrabschnitt (21),
wobei der erste Querrahmenabschnitt (31) den rechten (22a) und den linken (22b) unteren Rahmenabschnitt verbindet, der erste Querrahmenabschnitt (31) durch eine Rückseite des Kopfrohrabschnittes (21) in einer Ansicht einer sich verlängerten Richtung einer Mittellängsachse (C) des Kopfrohrabschnittes (21) hindurchgeht; und
eine Verbindung zwischen dem Kopfrohrabschnitt (21) und dem rechten unteren Rahmenabschnitt (22a) und eine Verbindung zwischen dem Kopfrohrabschnitt (21) und dem linken unteren Rahmenabschnitt (22b) höher als eine Verbindung zwischen dem Kopfrohrabschnitt (21) und dem Querrahmenabschnitt (31) positioniert sind,
**gekennzeichnet durch**
einen zweiten Querrahmenabschnitt (32), verbunden mit dem Kopfrohrabschnitt (21), wobei der zweite Querrahmenabschnitt (32) den rechten unteren Rahmenabschnitt (22a) und den linken unteren Rahmenabschnitt (22b) verbindet, der zweite Querrahmenabschnitt (32) **durch** die Vorderseite des Kopfrohrabschnittes (21) in der Ansicht einer sich verlängerten Richtung der Mittellängsachse (C) des Kopfrohrabschnittes (21) hindurchgeht,
wobei die Verbindungen zwischen dem Kopfrohrabschnitt (21) und dem unteren Rahmenabschnitten (22a, 22b) höher als eine Verbindung zwischen dem Kopfrohrabschnitt (21) und dem zweiten Querrahmenabschnitt (32) positioniert sind.

2. Motorrad- Fahrzeugkarosserierahmen (20) nach Anspruch 1, wobei der untere Rahmenabschnitt (22) keinen Abschnitt enthält, positioniert in der Quermitte des Motorrad- Fahrzeugkarosserierahmens (20).

3. Motorrad- Fahrzeugkarosserierahmen (20) nach Anspruch 1 oder 2, wobei der erste Querrahmenabschnitt (31) mit dem Kopfrohrabschnitt (21) direkt verbunden ist.

4. Motorrad- Fahrzeugkarosserierahmen (20) nach Anspruch 1 oder 2, wobei der erste Querrahmenabschnitt (31) mit dem Kopfrohrabschnitt (21) direkt durch einen Verbindungsrahmenabschnitt (33), verbunden mit einem Bodenendabschnitt des Kopfrohrabschnittes (21), verbunden ist, während er hinter dem Kopfrohrabschnitt (21) positioniert ist.

5. Motorrad- Fahrzeugkarosserierahmen (20) nach Anspruch 4, wobei der Verbindungsrahmenabschnitt (33) durch einen einzelnen Abschnitt gebildet ist.

6. Motorrad- Fahrzeugkarosserierahmen (20) nach Anspruch 4, wobei der Verbindungsrahmenabschnitt (33) durch eine Mehrzahl von Abschnitten gebildet ist.

7. Motorrad- Fahrzeugkarosserierahmen (20) nach einem der Ansprüche 1 bis 6, wobei jeder der rechten (22a) und linken (22b) unteren Rahmenabschnitte mit einem oberen Endabschnitt des Kopfrohrabschnittes (21) verbunden ist.

8. Motorrad- Fahrzeugkarosserierahmen (20) nach einem der Ansprüche 1 bis 7, wobei der erste Querrahmenabschnitt (31) zwischen einem oberen Ende des Kopfrohrabschnittes (21) und einem Bodenende des Kopfrohrabschnittes (21) in der verlängerten Richtung der Mittellängsachse (C) des Kopfrohrabschnittes (21) positioniert ist.

9. Motorrad- Fahrzeugkarosserierahmen (20) nach einem der Ansprüche 1 bis 8, wobei jeder der rechten (22a) und linken (22b) unteren Rahmenabschnitte enthält: einen ersten Abschnitt (22a1, 22b1), horizontal quer nach außen von dem Kopfrohrabschnitt (21) verlängert; und einen zweiten Abschnitt (22a2, 22b2), nach unten von einem quer nach außen Endabschnitt des ersten Abschnittes (22a1, 22b1) verlängert.

10. Motorrad- Fahrzeugkarosserierahmen (20) nach einem der Ansprüche 1 bis 9, wobei der erste Querrahmenabschnitt (31) eine Steifigkeit niedriger als eine Steifigkeit jedes der rechten (22a) und linken (22b) unteren Rahmenabschnitte hat.

11. Motorrad (1), aufweisend:
einen Motorrad- Fahrzeugkarosserierahmen (20) nach einem der Ansprüche 1 bis 10,
eine Lenkwelle (19), drehbar in den Kopfrohrabschnitt (21) eingesetzt;
eine Vordergabel (13), verbunden mit der Lenkwelle (19);
ein Vorderrad (11), drehbar durch die Vordergabel (13) gelagert;
einen Sitz (10), angeordnet über dem hinteren Rahmenabschnitt (22); und
eine Fußraste (30a), angeordnet über dem Bodenrahmenabschnitt (23), wobei die Fußraste (30a), positioniert zwischen dem unteren Rahmenabschnitt (22) und
dem hinteren Rahmenabschnitt (26) in einer Längsrichtung des Motorrades (1), die Fußraste (30a) positioniert in zumindest einer Quermitte des Motorrades (1).

12. Motorrad (1) nach Anspruch 11, wobei der rechte (22a) und linke (22b) untere Rahmenabschnitt positioniert ist ohne mit dem Vorderrad (11) in einer Vorderansicht überlappend zu sein.

13. Motorrad (1) nach Anspruch 121 oder 12,
wobei der Vordergabel (13) gestattet ist, verlängert oder verkürzt zu sein, und das Vorderrad (11) konfiguriert ist, mit dem rechten (22a) und linken (22b) unteren Rahmenabschnitt in einer Seitenansicht, wenn die Vordergabel (13) am meisten verkürzt ist, überlappt zu sein.

## Revendications

1. Cadre de motocyclette (20) comprenant :
une partie de tube de tête (21) positionnée au centre dans le sens transversal du cadre de motocyclette (20) ;
une partie de cadre descendante (22) reliée à la partie de tube de tête (21), la partie de cadre descendante (22) s'étendant vers le bas depuis la partie de tube de tête (21) ;
une partie de cadre inférieure (23) s'étendant vers l'arrière depuis la partie d'extrémité inférieure de la partie de cadre descendante (22) ; et
une partie de cadre arrière (26) s'étendant vers le haut depuis la partie d'extrémité arrière de la partie de cadre inférieure (23) ;
dans lequel la partie de cadre descendante (22) comporte une partie de cadre descendante de droite (22a) et une partie de cadre descendante de gauche (22b),
le cadre de motocyclette (20) comprend en outre une première partie de cadre transversale (31) reliée à la partie de tube de tête (21), la première partie de cadre transversale (31) reliant les parties de cadre descendantes de droite (22a) et de gauche (22b), la première partie de cadre transversale (31) traversant l'arrière de la partie de tube de tête (21) en regardant dans le sens de l'extension de l'axe longitudinal central (C) de la partie de tube de tête (21), et
une liaison entre la partie de tube de tête (21) et la partie de cadre descendante de droite (22a) et une liaison entre la partie de tube de tête (21) et la partie de cadre descendante de gauche (22b) sont positionnées plus haut que la liaison entre la partie de tube de tête (21) et la première partie de cadre transversale (31),
**caractérisé par**
une seconde partie de cadre transversale (32) reliée à la partie de tube de tête (21), la seconde partie de cadre transversale (32) reliant la partie de cadre descendante de droite (22a) et la partie de cadre descendante de gauche (22b), la seconde partie de cadre transversale (32) traversant l'avant de la partie de tube de tête (21) en regardant dans le sens de l'extension de l'axe longitudinal central (C) de la partie de tube de tête (21),
dans lequel les liaisons entre la partie de tube de tête (21) et les parties de cadre descendantes (22a, 22b) sont positionnées plus haut que la liaison entre la partie de tube de tête (21) et la seconde partie de cadre transversale (32).

2. Cadre de motocyclette (20) selon la revendication 1, dans lequel la partie de cadre descendante (22) ne comporte pas de partie positionnée au centre dans le sens transversal du cadre de motocyclette (20).

3. Cadre de motocyclette (20) selon la revendication 1 ou 2, dans lequel la première partie de cadre transversale (31) est reliée directement à la partie de tube de tête (21).

4. Cadre de motocyclette (20) selon la revendication 1 ou 2, dans lequel la première partie de cadre transversale (31) est reliée indirectement à la partie de tube de tête (21) par l'intermédiaire d'une partie de cadre de liaison (33) reliée à la partie d'extrémité inférieure de la partie de tube de tête (21) en étant positionnée vers l'arrière de la partie de tube de tête (21).

5. Cadre de motocyclette (20) selon la revendication 4, dans lequel la partie de cadre de liaison (33) est formée d'une seule partie.

6. Cadre de motocyclette (20) selon la revendication 4, dans lequel la partie de cadre de liaison (33) est formée d'une pluralité de parties.

7. Cadre de motocyclette (20) selon l'une quelconque des revendications 1 à 6, dans lequel chacune des parties de cadre descendantes de droite (22a) et de gauche (22b) est reliée à la partie d'extrémité supérieure de la partie de tube de tête (21).

8. Cadre de motocyclette (20) selon l'une quelconque des revendications 1 à 7, dans lequel la première partie de cadre transversale (31) est positionnée entre l'extrémité supérieure de la partie de tube de tête (21) et l'extrémité inférieure de la partie de tube de tête (21) dans le sens de l'extension de l'axe longitudinal central (C) de la partie de tube de tête (21).

9. Cadre de motocyclette (20) selon l'une quelconque des revendications 1 à 8, dans lequel chacune des parties de cadre descendantes de droite (22a) et de gauche (22b) comporte : une première section (22a1, 22b1) s'étendant horizontalement transversalement vers l'extérieur depuis la partie de tube de tête (21) ; et une seconde section (22a2, 22b2) s'étendant vers le bas depuis la partie d'extrémité transversalement vers l'extérieur de la première section (22a1, 22b1).

10. Cadre de motocyclette (20) selon l'une quelconque des revendications 1 à 9, dans lequel la première partie de cadre transversale (31) possède une rigidité inférieure à la rigidité de chacune des parties de cadre descendantes de droite (22a) et de gauche (22b).

11. Motocyclette (1) comprenant :
un cadre de motocyclette (20) selon l'une des revendications 1 à 10 ;
un axe de direction (19) inséré pour tourner dans la partie de tube de tête (21) ;
une fourche avant (13) reliée à l'axe de direction (19) ;
une roue avant (11) soutenue en rotation par la fourche avant (13) ;
une selle (10) disposée au-dessus de la partie de cadre arrière (26) ; et
un repose-pied (30a) disposé au-dessus de la partie de cadre inférieur (23), le repose-pieds (30a) étant positionné entre la partie de cadre descendante (22) et la partie de cadre arrière (26) dans le sens longitudinal de la motocyclette (1), le repose-pied (30a) étant positionné au moins au centre dans le sens transversal de la motocyclette (1).

12. Motocyclette (1) selon la revendication 11, dans laquelle les parties de cadre descendantes de droite (22a) et de gauche (22b) sont disposées sans recouvrement avec la roue avant (11) vue de l'avant.

13. Motocyclette (1) selon la revendication 11 ou 12,
dans laquelle la fourche avant (13) peut être allongée et contractée, et
la roue avant (11) est configurée pour être recouverte par les parties de cadre descendantes de droite (22a) et de gauche (22b) vue de côté lorsque la fourche avant (13) est contractée au maximum.
